# FASCICULE DE BREVET EUROPEEN

(11) **EP 1 622 954 B1**
(45) Date de publication et mention de la délivrance du brevet: **21.03.2012**
(21) Numéro de dépôt: 04730982.8
(22) Date de dépôt: 04.05.2004
(51) Int. Cl.: C08F 297/02, C08F 297/04, C08L 53/00, C08L 53/02, B60C 1/00, C08F 8/00

(54) **PROCEDE DE PREPARATION DE COPOLYMERES A BLOCS POUR COMPOSITIONS DE BANDE DE ROULEMENT DE PNEUMATIQUE, ET CES COPOLYMERES**
VERFAHREN ZUR HERSTELLUNG VON BLOCKCOPOLYMEREN FÜR REIFENPROFILZUSAMMENSETZUNGEN, UND COPOLYMERE DARAUS
METHOD FOR PRODUCING BLOCK COPOLYMERS FOR TYRE TREAD COMPOSITIONS, AND CORRESPONDING COPOLYMERS

(30) Priorité: 07.05.2003 FR 0305590
(43) Date de publication de la demande: 08.02.2006
(73) Titulaire: Société de Technologie Michelin, 63000 Clermont-Ferrand (FR); Michelin Recherche et Technique S.A., 1763 Granges-Paccot (CH)
(72) Inventeur: LESAGE, Pierre, F-63000 Clermont-Ferrand (FR)
(74) Mandataire: Le Cam, Véronique Marie Christine
(86) Numéro de dépôt international: PCT/EP2004/004724
(87) Numéro de publication internationale: WO 2004/099278

(56) Documents cités:
- EP-A- 0 856 522
- EP-A- 1 018 521
- WO-A-03/037946
- GB-A- 1 516 861
- GB-A- 1 525 381
- GB-A- 2 333 298
- US-A- 5 134 199

## Description

La présente invention concerne un procédé de préparation d'un copolymère à blocs fonctionnalisé, couplé ou étoilé qui est utilisable dans une composition de caoutchouc réticulable au soufre et d'hystérèse réduite à l'état réticulé, un tel copolymère à blocs et une composition de caoutchouc l'incorporant qui est utilisable dans une bande de roulement d'enveloppe de pneumatique. L'invention concerne également cette bande de roulement et une enveloppe de pneumatique l'incorporant présentant une résistance au roulement réduite.

La réduction de l'hystérèse des mélanges est un objectif permanent de l'industrie du pneumatique afin de limiter la consommation d'essence et de préserver ainsi l'environnement.

Cette réduction d'hystérèse doit se faire en conservant intacte, voire en améliorant l'aptitude à la mise en oeuvre des mélanges. Pour atteindre l'objectif de baisse d'hystérèse, de nombreuses solutions ont déjà été expérimentées. En particulier, la fonctionnalisation en bout de chaîne est apparue comme une voie intéressante.

La plupart des voies proposées a consisté en la recherche de fonctions adjointes en fin de polymérisation et susceptibles d'interaction avec le noir de carbone, par exemple incluses dans des polymères étoilés ou couplés à l'étain. A titre d'exemple, on peut citer le document de brevet européen EP-A-709 235. D'autres fonctions interagissant avec le noir de carbone ont également été adjointes en bout de chaîne, comme la 4,4'-bis-(diéthylaminobenzophénone), encore appelée DEAB, ou d'autres fonctions aminées. A titre d'exemple, on peut citer les documents de brevet FR-A-2 526 030 et US-A- 4 848 511.

Depuis quelques années, l'utilisation de la silice a été rendue possible et la recherche de fonctions interactives avec cette charge s'est développée. On peut citer notamment à ce titre le document de brevet FR-A-2 740 778, qui divulgue par exemple des fonctions comprenant un groupe silanol. On peut également citer le document US-A-5 066 721, qui divulgue des fonctions alkoxysilane ou aryloxysilane, ou encore le document US-A-3 244 664.

La plupart de ces solutions, tant pour le noir que pour la silice, conduit réellement à une limitation de l'hystérèse et à un gain en renforcement des compositions correspondantes. Malheureusement, il est tout aussi général que ces améliorations conduisent à une plus grande difficulté de mise en oeuvre de ces compositions.

On a donc recherché d'autres moyens de diminution de l'hystérèse qui n'affectent pas la mise en oeuvre des mélanges.

En particulier, l'utilisation de polymères à faible potentiel hystérétique, en particulier le polyisoprène, est apparue prometteuse. Cependant, l'utilisation directe de ce type de polymère n'offre pas toujours un compromis module dynamique / hystérèse satisfaisant.

Pour pallier cet inconvénient, on a cherché à utiliser des copolymères à blocs comprenant un bloc polyisoprène.

Les copolymères à blocs sont généralement constitués de matériaux à phases ségrégées. On peut par exemple citer les copolymères diblocs polyisoprène - polystyrène, dont la synthèse est largement décrite dans la littérature. Ces copolymères diblocs sont connus pour présenter des propriétés intéressantes de résistance aux impacts.

Les copolymères à blocs comprenant des blocs polyisoprène et polybutadiène (IR et BR en abrégé, respectivement) sont également décrits dans la littérature.

Certaines réactions de post-polymérisation transforment ces élastomères en matériaux thermoplastiques. Par exemple, lors de l'hydrogénation d'un copolymère tribloc BR-IR-BR, la fraction butadiénique forme un polyéthylène cristallin, alors que la fraction isoprénique conduit à un matériau caoutchoutique de type éthylène/ butylène.

L'hydrochloration de ces matériaux peut également leur conférer un caractère cristallin.

Des copolymères diblocs IR-SBR (polyisoprène - copolymère de styrène et de butadiène) ont été décrits dans le document de brevet européen EP-A-438 967, en relation avec une charge renforçante constituée spécifiquement de noir de carbone. La masse moléculaire moyenne en nombre du bloc IR est préférentiellement comprise entre 70 000 et 150 000 g/mol, et celle du bloc SBR est de préférence comprise entre 220 000 et 240 000 g/mol. De plus, le rapport de la masse moléculaire moyenne en nombre du bloc IR sur celle du bloc SBR doit être supérieur à 33 % et peut aller jusqu'à 300 %.

Les compositions de caoutchouc décrites dans ce document peuvent présenter une structure variable, laquelle est de type lamellaire lorsque ledit rapport est voisin de 33 %, et de type à sphères lorsque ledit rapport est voisin de 300 %.

Cependant, pour toutes ces valeurs dudit rapport allant de 33 % à 300 %, il est à noter que la masse moléculaire moyenne en nombre relativement élevée du bloc IR conduit toujours à une ségrégation marquée des phases correspondant respectivement aux blocs IR et SBR, en raison des taux élevés d'enchaînements 1, 4 pour le bloc IR.

Les copolymères à blocs IR-BR ont aussi été envisagés en tant qu'agents compatibilisants des coupages de polyisoprène et de polybutadiène.

On peut citer à ce titre l'article de D. J. Zanzig, F. L. Magnus, W. L. Hsu, A. F. Halasa, M. E. Testa, Rubber Chemistry and Technology vol. 66, pp. 538-549 (1993), qui mentionne l'utilisation de copolymères à blocs IR-BR avec 80 ou 50 % d'IR. A ces taux relatifs, la masse moléculaire moyenne en nombre du bloc IR est toujours égale ou supérieure à 200 000 g/mol, et il en résulte que les blocs de ces copolymères forment également des phases ségrégées.

On peut également citer à ce titre l'article de R. E. Cohen, A. R. Ramos, Macromolecules Vol. 12, n°1, 131-134 (1979). Dans cet article, les copolymères diblocs utilisés présentent des blocs IR de masse moléculaire moyenne en nombre égale à 104 000 g/mol, ou égale à 133 000 g/mol. La masse moléculaire relativement élevée des blocs IR et des blocs BR conduit également à une forte ségrégation des phases relatives à ces deux blocs.

Un but de la présente invention est de proposer un procédé de préparation d'un copolymère à blocs fonctionnalisé, couplé ou étoilé qui soit utilisable dans une composition de caoutchouc réticulable au soufre, telle qu'une composition de bande de roulement de pneumatique, et qui confère à cette composition une hystérèse réduite à l'état réticulé, ce copolymère étant tel que l'un au moins de ses blocs est constitué d'un polyisoprène, au moins un autre bloc étant constitué d'un élastomère diénique autre qu'un polyisoprène dont le taux molaire d'unités issues d'un ou de diènes conjugués est supérieur à 15 %. Ce but est atteint en ce que les demanderesses ont découvert d'une manière inattendue que :
(i) la copolymérisation d'un ou plusieurs monomères comprenant au moins un diène conjugué autre que l'isoprène à l'aide d'un système catalytique comprenant un solvant hydrocarboné, un composé A d'un métal du groupe ÏIIA, un composé B d'un métal alcalino-terreux et un initiateur polymère C comportant une liaison C-Li qui est constitué d'un polyisoprène monolithié destiné à former ledit bloc polyisoprène, et
(ii) l'ajout au produit de cette copolymérisation d'un agent de fonctionnalisation, de couplage ou d'étoilage comportant respectivement un, deux ou au moins trois groupes époxy, pour que le ou chaque bloc constitué d'un élastomère diénique autre qu'un polyisoprène soit fonctionnalisé, couplé ou étoilé,
permet de préparer un copolymère à blocs fonctionnalisé, couplé ou étoilé dans lequel le(s)dit(s) bloc(s) polyisoprène présente(nt) une masse moléculaire moyenne en nombre Mₙ₁ comprise entre 2 500 et 20 000 g/mol, le(s)dit(s) bloc(s) autre qu'un polyisoprène présentant une masse moléculaire moyenne en nombre Mₙ₂ comprise entre 65 000 et 350 000 g/mol et une teneur en enchaînements 1,4-trans égale ou supérieure à 70 %,
ce copolymère étant utilisable dans une composition de caoutchouc réticulable au soufre pour bande de roulement de pneumatique comprenant du noir de carbone à titre de charge renforçante du fait de l'interaction améliorée de ce copolymère avec le noir de carbone, ce copolymère selon l'invention permettant d'optimiser d'une manière significative pour cette composition, à l'état réticulé, les résultats de réduction d'hystérèse et, à l'état non réticulé, les résultats d'aptitude à la mise en oeuvre.

On notera que cette masse moléculaire réduite du ou des bloc(s) polyisoprène permet de ne pas abaisser trop significativement le module du copolymère à blocs obtenu.

De préférence, le rapport desdites masses moléculaires moyennes en nombre Mₙ₁ / Mₙ₂ est sensiblement compris entre 5 et 20 %.

Selon une autre caractéristique de l'invention, le ou chaque bloc polyisoprène dudit copolymère présente un taux d'enchaînements vinyliques (3,4 et 1,2) compris entre 1 et 20 %.

En particulier, en prenant comme référence les hystérèses relatives à des élastomères diéniques « témoin » dont le taux molaire d'unités issues de diènes conjugués est supérieur à 15 %, par exemple un copolymère SBR ou un copolymère à blocs IR-SBR tous deux non modifiés (i.e. ni fonctionnalisés, ni couplés, ni étoilés), un copolymère à blocs selon l'invention présente une hystérèse plus réduite que celle de ces élastomères « témoin ».

A titre d'élastomère diénique dont le taux molaire d'unités issues de diènes conjugués est supérieur à 15 % qui est susceptible de former ledit bloc autre que ledit bloc polyisoprène, on entend tout homopolymère obtenu par polymérisation d'un monomère diène conjugué autre que l'isoprène ayant 4 à 12 atomes de carbone, ou tout copolymère obtenu par copolymérisation d'un ou plusieurs diènes conjugués entre eux ou avec un ou plusieurs composés vinylaromatiques ayant de 8 à 20 atomes de carbone.

A titre de diène conjugué conviennent notamment le 1,3-butadiène, les 2,3-di(alcoyle en C1 à C5) 1,3-butadiène tels que par exemple le 2,3 diméthyl-1,3-butadiène, le 2,3-diéthyl-1,3-butadiène, le 2-méthyl 3-éthyl 1,3-butadiène, le 2-méthyl 3-isopropyl 1,3-butadiène, le phényl 1,3-butadiène, le 1,3-pentadiène, le 2,4-hexadiène.

A titre de composés vinylaromatiques conviennent notamment le styrène, l'ortho-, para- ou meta-méthylstyrène, le mélange commercial "vinyl toluène", le para-tertiobutylstyrène, les méthoxystyrènes, le vinylmésitylène.

Avantageusement, on utilise du butadiène et un vinylaromatique, tel que le styrène, à titre de monomères à copolymériser avec le polyisoprène présent dans l'initiateur lithié C, de préférence pour l'obtention d'un copolymère à blocs IR et SBR.

Concernant ledit système catalytique qui est utilisé pour préparer les copolymères à blocs selon l'invention, on peut citer comme exemples représentatifs desdits composés A utilisables les composés organométalliques suivants :
les organoaluminiques halogénés ou non tels que le triéthylaluminium, le triisobutyl-aluminium, le chlorure de diéthylaluminium, le dichlorure d'éthylaluminium, le sesquichlorure d'éthylaluminium, le sesquichlorure de méthylaluminium; les hydrures de dialcoylaluminium, tels que l'hydrure de diéthylaluminium, l'hydrure de diisobutylaluminium.

De préférence, on utilise pour ledit composé A un trialkyl-aluminium dont le nombre d'atomes de carbone va de 1 à 12, avantageusement le trioctyl-aluminium.

A titre de composés B, sont notamment utilisables les hydrures H₂Ba et H₂Sr, les sels d'acides organiques mono ou polyfonctionnels de formules (R-COO)₂ Ba ou Sr, R₁-(COO)₂ Ba ou Sr, où R et R₁ sont des radicaux organiques (le premier monovalent et le second divalent), les thioacides correspondants, les alcoolates mono ou polyfonctionnels et les thiolates correspondants; les pénates mono ou polyfonctionnels et les thiophénates correspondants; les sels d'acides alcools et d'acides phénols de Ba ou Sr et les thio-produits correspondants; les β-dicétonates de Ba ou Sr tels que les produits de réaction du Ba ou Sr avec l'acétylacétone, le dibenzoylméthane, la thénoyltrifluoro-acétone, la benzoyltrifluoro-acétone, la benzoyl-acétone; les dérivés organiques du Ba ou Sr tels que ceux du 1,1-diphényléthylène, du 1,2-acénaphtylène, du tétraphénylbutane, de l'α-méthyl-styrène, ou encore ceux tels que le diphényl Ba ou Sr, le bis-cyclopentadiényl Ba ou Sr, les trialcoylsilyl Ba ou Sr, le triphénylsilyl Ba ou Sr; les dérivés organiques mixtes tels que l'iodure de phényl-Ba, l'iodure de méthyl-Sr, les sels de Ba ou Sr des amines secondaires; les métaux cétyles tels que la benzophénone Ba ou Sr, la cinnamone Ba ou Sr et les produits alcoylés correspondants et les homologues soufrés; les ions radicaux du Ba et Sr tels que ceux du naphtalène, de l'anthracène, du chrysène, du diphényle, etc.

On peut également utiliser pour le composé B un alcoolate de calcium.

De préférence, on utilise pour ledit composé B un alcoolate de baryum, avantageusement l'éthyl diglycolate de baryum ou le nonylphénoxyde de baryum.

A titre d'initiateur polymère C comportant une liaison C-Li, est utilisable un polyisoprène monolithié non fonctionnalisé, c'est-à-dire dépourvu de tout groupe fonctionnel tels que les groupes carboxyliques, amine, amide, de préférence obtenu par voie anionique.

Selon un premier mode de réalisation de l'invention, ce système catalytique selon l'invention comprend un co-catalyseur, résultant du produit de réaction dans ledit solvant hydrocarboné dudit composé A et dudit composé B, et ledit initiateur polymère C.

Selon un premier exemple de réalisation de ce premier mode, le procédé de préparation selon l'invention consiste à mettre en oeuvre les étapes suivantes :
- dans une première étape, on prépare ce co-catalyseur en faisant réagir, dans ledit solvant hydrocarboné inerte, les deux composés A et B. Puis on chauffe le mélange obtenu de préférence à une température comprise entre 20 et 120 C, encore plus préférentiellement entre 30 et 50° C et pendant une durée suffisante pour permettre la réaction des deux composés A et B (généralement comprise entre 1 et 60 min., de préférence entre 20 et 40 min.); puis
- dans une seconde étape, on met en contact ledit co-catalyseur avec le milieu de polymérisation comprenant ledit ou lesdits monomères à copolymériser (lesquels sont par exemple en solution dans un solvant de polymérisation, dans le cas d'une copolymérisation en solution), à l'exclusion dudit initiateur polymère C; puis
- dans une troisième étape, on adjoint au milieu de polymérisation ainsi obtenu ledit initiateur C, de sorte à faire réagir le mélange obtenu à ladite seconde étape, puis
- dans une quatrième étape, on ajoute ledit agent de fonctionnalisation, de couplage ou d'étoilage au produit de la copolymérisation,
et l'on stoppe ultérieurement la réaction de fonctionnalisation, de couplage ou d'étoilage pour obtenir ledit copolymère à blocs fonctionnalisé, couplé ou étoilé.

Selon un second exemple de réalisation de ce premier mode, le procédé de préparation selon l'invention consiste alors à mettre en oeuvre les étapes suivantes:
- une première étape qui est la même que celle décrite pour ledit premier exemple; puis
- une seconde étape qui consiste à ajouter ledit initiateur polymère C au pré-mélange obtenu à la première étape et formé par les composés A et B, éventuellement après avoir ajouté un composé alkyl lithien pour améliorer l'activité du système catalytique. De préférence, ce composé alkyl lithien est le butyl lithium ; puis
- une troisième étape qui consiste à ajouter le système catalytique ainsi obtenu au milieu de polymérisation comprenant ledit ou lesdits monomères à copolymériser (lesquels sont par exemple en solution dans un solvant de polymérisation, dans le cas d'une copolymérisation en solution) ; puis
- une quatrième étape qui consiste à ajouter ledit agent de fonctionnalisation, de couplage ou d'étoilage au produit de la copolymérisation, et
l'on stoppe ultérieurement la réaction de fonctionnalisation, de couplage ou d'étoilage pour obtenir ledit copolymère à blocs fonctionnalisé, couplé ou étoilé.

Les conditions de température sont les mêmes que celles dudit premier exemple.

Selon un second mode de réalisation de l'invention, le système catalytique comprend un pré-mélange desdits composés A et C dans ledit solvant hydrocarboné et ledit composé B.

Ce second mode est par exemple mis en oeuvre de la manière suivante :
- dans une première étape, on réalise un pré-mélange desdits composés A et C dans ledit solvant hydrocarboné, puis
- dans une seconde étape, on ajoute ce pré-mélange au milieu de polymérisation comprenant ledit ou lesdits monomères à copolymériser en solution dans un solvant de polymérisation, puis
- dans une troisième étape, on ajoute ledit composé B au mélange obtenu à ladite seconde étape, puis
- dans une quatrième étape, on ajoute ledit agent de fonctionnalisation, de couplage ou d'étoilage au produit de la copolymérisation, et
l'on stoppe ultérieurement la réaction de fonctionnalisation, de couplage ou d'étoilage pour obtenir ledit copolymère à blocs fonctionnalisé, couplé ou étoilé.

Dans ces deux modes du procédé de préparation selon l'invention, on utilise une quantité des réactifs A et B telle que le rapport molaire A/B est compris entre 0,5 et 5, et préférentiellement entre 2,5 et 4. De plus, on utilise une quantité des deux réactifs B et C telle que le rapport molaire C/B est compris entre 0,2 et 4, et préférentiellement entre 1,5 et 4.

Dans le cas d'une copolymérisation en solution, le solvant de polymérisation est de préférence un solvant hydrocarboné, préférentiellement le cyclohexane, et la température de polymérisation est comprise entre 20 et 150° C, de préférence entre 60 et 110° C.

De plus, la concentration en métal alcalino-terreux du système catalytique selon l'invention est comprise entre 0,01 et 0,5 mol.l⁻¹, de préférence entre 0,03 et 0,25 mol.l⁻¹.

On notera que la copolymérisation selon l'invention peut être continue, discontinue et qu'elle peut également être réalisée en masse.

Concernant les agents modifiants spécifiques de fonctionnalisation, de couplage ou d'étoilage qui sont utilisables pour l'obtention des copolymères à blocs modifiés selon l'invention, ces agents modifiants comportent respectivement un, deux ou au moins trois groupes glycidyl et, de préférence, ces agents comportent plus précisément un, deux ou au moins trois groupes glycidyl éther, selon que l'on souhaite obtenir des copolymères à blocs fonctionnalisés, couplés ou étoilés.

Selon une autre caractéristique de l'invention, ledit ou chaque groupe glycidyl éther est lié à un groupe alkyl, cycloalkyl, aryl ou aralkyl, de préférence un groupe aryl

Pour l'obtention d'un copolymère à blocs fonctionnalisé selon l'invention (i.e. par définition à une seule extrémité de chaîne), on utilise un agent de fonctionnalisation qui comporte un groupe monoépoxy, tel qu'un groupe monoglycidyl éther lié à un groupe alkyl, cycloalkyl, aryl ou aralkyl, le copolymère obtenu étant linéaire à deux blocs (e.g. IR-SBR).

Pour l'obtention d'un copolymère à blocs couplé selon l'invention, on utilise un agent de couplage qui comporte un groupe diépoxy, tel qu'un groupe bis(glycidyl éther) lié à un groupe alkyl, cycloalkyl, aryl ou aralkyl, ce copolymère étant linéaire à trois blocs, les deux blocs d'extrémité étant constitués d'un polyisoprène (e.g. IR-SBR-IR).

De préférence, l'agent de couplage utilisé est le bis(4-glycidyloxyphényl)méthane.

Pour l'obtention d'un copolymère à blocs étoilé selon l'invention, on utilise un agent d'étoilage qui comporte un groupe à n fonctions époxy avec n entier naturel égal ou supérieur à 3, pour l'obtention d'un copolymère ramifié à n branches, chaque branche comportant deux blocs parmi lesquels le bloc d'extrémité est un polyisoprène (e.g. branches à blocs SBR-IR).

A titre exemplatif de tels agents d'étoilage utilisables selon l'invention, on peut citer des agents d'étoilage comportant un groupe tétraépoxy pour l'obtention d'un copolymère ramifié à 4 branches, tels que le bis(4-(diglycidylamino)phényl)méthane, et des agents d'étoilage comportant plus de 4 fonctions époxy reliées entre elles par des atomes d'azote.

Selon une caractéristique préférentielle de l'invention, l'ajout dudit agent modifiant est réalisé de telle manière que le rapport molaire agent modifiant à groupe(s) époxy / Li soit compris entre 0,2 et 1 et, à titre encore plus préférentiel, entre 0,3 et 0,8.

En effet, des essais réalisés dans le cadre de la présente invention ont montré que le « saut » ou écart de viscosité inhérente entre le copolymère à blocs non modifié et le copolymère à blocs modifié (i.e. fonctionnalisé, couplé ou étoilé), qui constitue un indicateur satisfaisant de la modification réalisée sur le copolymère, atteint un optimum lorsque la valeur de ce rapport agent modifiant / Li appartient aux plages précitées.

Un copolymère à blocs fonctionnalisé, couplé ou étoilé selon l'invention, qui est utilisable dans une composition de caoutchouc réticulable au soufre, d'hystérèse réduite à l'état réticulé et comprenant du noir de carbone à titre de charge renforçante, l'un au moins desdits blocs étant constitué d'un polyisoprène et au moins un autre bloc étant constitué d'un élastomère diénique autre qu'un polyisoprène dont le taux molaire d'unités issues d'un ou de diènes conjugués est supérieur à 15 %, est tel que :
- ledit bloc constitué d'un élastomère diénique autre qu'un polyisoprène est fonctionnalisé, couplé ou étoilé au moyen d'un agent de fonctionnalisation, de couplage ou d'étoilage comportant respectivement un, deux ou au moins trois groupes époxy, et que
- le(s)dit(s) bloc(s) polyisoprène présentent une masse moyenne en nombre Mₙ₁ comprise entre 2500 et 20000 g/mol, le(s)dit(s) bloc(s) constitué(s) d'un élastomère diénique autre qu'un polyisoprène présentant une masse moyenne en nombre Mₙ₂ comprise entre 65000 et 350000 g/mol et un taux d'enchaînements 1,4-trans égal ou supérieur à 70 %.

Selon une autre caractéristique de l'invention, le copolymère à blocs fonctionnalisé est tel que ledit agent de fonctionnalisation comporte un groupe monoépoxy, tel qu'un groupe monoglycidyl éther, de sorte que ledit copolymère soit linéaire à deux blocs.

Selon une autre caractéristique de l'invention, le copolymère à blocs couplé est tel que ledit agent de couplage comporte un groupe diépoxy, tel qu'un groupe bis(glycidyl éther), de sorte que ledit copolymère soit linéaire à trois blocs, les deux blocs d'extrémité étant chacun constitués d'un polyisoprène.

De préférence, ledit agent de couplage est le bis(4-glycidyloxyphényl)méthane.

Selon une autre caractéristique de l'invention, le copolymère à blocs étoilé est tel que ledit agent d'étoilage comporte un groupe à n fonctions époxy avec n entier naturel égal ou supérieur à 3, de sorte que ledit copolymère soit ramifié à n branches, chaque branche comportant deux blocs parmi lesquels le bloc d'extrémité est constitué d'un polyisoprène.

Cet agent d'étoilage comporte par exemple un groupe tétraépoxy pour l'obtention d'un copolymère ramifié à 4 branches, tel que le bis(4-(diglycidylamino)phényl)méthane, ou bien plus de 4 fonctions époxy reliées entre elles par des atomes d'azote, pour l'obtention de plus de quatre branches.

De préférence, un copolymère à blocs selon l'invention est tel que le rapport desdites masses moléculaires moyennes en nombre Mₙ₁ / Mₙ₂ est compris entre 5 et 20 %.

Egalement à titre préférentiel, un copolymère à blocs selon l'invention est tel que l'élastomère diénique constituant ledit ou chaque bloc autre qu'un polyisoprène est un copolymère du butadiène et d'un vinylaromatique, tel que le styrène.

Egalement à titre préférentiel, un copolymère à blocs selon l'invention est tel que ledit ou chaque bloc polyisoprène présente un taux d'enchaînements vinyliques 3,4 et 1,2 qui est sensiblement compris entre 1 et 20 %.

Une composition de caoutchouc selon l'invention comprend une charge renforçante constituée en tout ou en partie de noir de carbone et est telle qu'elle comprend ledit copolymère à blocs fonctionnalisé, couplé ou étoilé tel que défini précédemment, ce qui rend cette composition adaptée, d'une part, pour présenter une aptitude à la mise en oeuvre améliorée à l'état non réticulé et une hystérèse réduite à l'état réticulé et, d'autre part, pour constituer une bande de roulement d'enveloppe de pneumatique présentant une résistance au roulement réduite.

De préférence, la composition selon l'invention comprend ce copolymère à blocs selon une quantité supérieure à 50 pce et pouvant aller jusqu'à 100 pce (pce : parties en poids pour cent parties d' élastomère(s)) et, à titre encore plus préférentiel, selon une quantité de 100 pce.

De préférence, ladite charge renforçante comprend à titre majoritaire du noir de carbone (i.e. selon une fraction massique supérieure à 50 %).

Egalement à titre préférentiel, la charge renforçante comprend du noir de carbone selon une quantité supérieure à 40 pce (pce : parties en poids pour cent parties d'élastomère(s)).

A titre de noir de carbone, conviennent tous les noirs qui sont commercialement disponibles ou conventionnellement utilisés dans les pneumatiques et particulièrement dans les bandes de roulement, notamment les noirs du type HAF, ISAF, SAF et de préférence des noirs des série 200 ou 300. A titre d'exemples non limitatifs de tels noirs, on peut citer les noirs N234, N339, N347, N375, ainsi que les noirs de série 100 tels que N115 et N134.

Bien entendu, par « noir de carbone » on entend également un coupage de différents noirs de carbone qui est utilisable pour constituer tout ou partie de ladite charge renforçante.

La charge renforçante peut comprendre en outre une charge inorganique renforçante, de préférence à titre minoritaire (i.e. selon une fraction massique inférieure à 50 %).

Dans la présente demande, on entend par "charge inorganique renforçante", de manière connue, une charge inorganique ou minérale, quelles que soient sa couleur et son origine (naturelle ou de synthèse), encore appelée charge "blanche" ou parfois charge "claire" par opposition au noir de carbone, cette charge inorganique étant capable de renforcer à elle seule, sans autre moyen qu'un agent de couplage intermédiaire, une composition de caoutchouc pour pneumatiques, en d'autres termes capable de remplacer, dans sa fonction de renforcement, une charge conventionnelle de noir de carbone de grade pneumatique.

Préférentiellement, la charge inorganique renforçante est, en totalité ou tout du moins majoritairement, de la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, même si les silices précipitées hautement dispersibles sont préférées.

Dans le présent exposé, la surface spécifique BET est déterminée de manière connue, selon la méthode de Brunauer-Emmett-Teller décrite dans "The Journal of the American Chemical Society" Vol. 60, page 309, février 1938 et correspondant à la norme AFNOR-NFT-45007 (novembre 1987); la surface spécifique CTAB est la surface externe déterminée selon la même norme AFNOR-NFT-45007 de novembre 1987.

Par silice hautement dispersible, on entend toute silice ayant une aptitude très importante à la désagglomération et à la dispersion dans une matrice élastomère, observable de manière connue par microscopie électronique ou optique, sur coupes fines. Comme exemples non limitatifs de telles silices hautement dispersibles préférentielles, on peut citer la silice Perkasil KS 430 de la société Akzo, la silice BV 3380 de la société Degussa, les silices Zeosil 1165 MP et 1115 MP de la société Rhodia, la silice Hi-Sil 2000 de la société PPG, les silices Zeopol 8741 ou 8745 de la Société Huber, des silices précipitées traitées telles que par exemple les silices "dopées" à l'aluminium décrites dans le document de brevet EP-A-735088.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles telles que décrites ci-dessus.

Par exemple, les coupages noir/ silice ou les noirs partiellement ou intégralement recouverts de silice conviennent pour constituer la charge inorganique renforçante.

Conviennent également à titre de charge inorganique renforçante les noirs de carbone modifiés par de la silice tels que les charges commercialisées par la société CABOT sous la dénomination « CRX 2000 » et qui sont décrites dans le document de brevet WO-A-96/37547, des alumines (de formule Al₂O₃) telles que les alumines à dispersibilité élevée qui sont décrites dans le document de brevet européen EP-A-810 258, ou encore des hydroxydes d'aluminium, tels que ceux décrits dans le document de brevet international WO-A-99/28376.

La composition de caoutchouc selon l'invention peut comprendre en outre de manière classique, un agent de liaison charge inorganique renforçante / matrice élastomère (encore appelé agent de couplage), qui a pour fonction d'assurer une liaison (ou couplage) suffisante, de nature chimique et/ou physique, entre l'éventuelle charge inorganique renforçante et la matrice, tout en facilitant la dispersion de cette charge inorganique au sein de ladite matrice.

De manière connue, en présence d'une charge inorganique renforçante, il est nécessaire d'utiliser un agent de couplage dont la fonction est d'assurer une connexion chimique et/ou physique suffisante entre la charge inorganique (surface de ses particules) et l'élastomère.

Un tel agent de couplage, par conséquent au moins bifonctionnel, a par exemple comme formule générale simplifiée "Y-T-X", dans laquelle:
- Y représente un groupe fonctionnel (fonction "Y") capable de se lier physiquement et/ou chimiquement à la charge inorganique, une telle liaison pouvant être établie, par exemple, entre un atome de silicium de l'agent de couplage et les groupes hydroxyle de surface de la charge inorganique (e.g. les silanols de surface pour la silice),
- X représente un groupe fonctionnel (fonction "X") capable de se lier physiquement et/ou chimiquement à l'élastomère diénique, e.g. via un atome de soufre,
- T représente un groupe divalent permettant de relier Y et X.

On peut utiliser tout agent de couplage susceptible d'assurer efficacement, dans les compositions de caoutchouc diénique utilisables pour la fabrication de bandes de roulement de pneumatiques, la liaison entre une charge inorganique renforçante telle que silice et un élastomère diénique, en particulier des organosilanes ou des polyorganosiloxanes polyfonctionnels porteurs des fonctions X et Y.

On utilise notamment des silanes polysulfurés, dits "symétriques" ou "asymétriques" selon leur structure particulière, tels que décrits par exemple dans les documents de brevet FR 2 149 339, FR 2 206 330, US 3 842 111, US 3 873 489, US 3 978 103, US 3 997 581, US 4 002 594, US 4 072 701, US 4 129 585, US 5 580 919, US 5 583 245, US 5 650 457, US 5 663 358, US 5 663 395, US 5 663 396, US 5 674 932, US 5 675 014, US 5 684 171, US 5 684 172, US 5 696 197, US 5 708 053, US 5 892 085, EP 1 043 357, WO 02/083782.

Conviennent en particulier pour la mise en oeuvre de l'invention, sans que la définition ci-après soit limitative, des silanes polysulfurés dits "symétriques" répondant à la formule générale (I) suivante:

(I) Z - A - Sₙ - A - Z ,

dans laquelle:
- n est un entier de 2 à 8 (de préférence de 2 à 5) ;
- A est un radical hydrocarboné divalent (de préférence des groupements alkylène en C₁-C₁₈ ou des groupements arylène en C₆-C₁₂, plus particulièrement des alkylènes en C₁-C₁₀, notamment en C₁-C₄, en particulier le propylène) ;
- Z répond à l'une des formules ci-après: 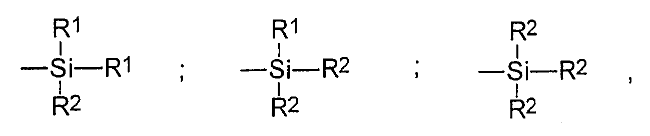 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "n" est un nombre fractionnaire de préférence compris entre 2 et 5, plus préférentiellement proche de 4. Mais l'invention peut être aussi avantageusement mise en oeuvre par exemple avec des alkoxysilanes disulfurés (n = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂.

Le TESPD est commercialisé par exemple par la société Degussa sous la dénomination Si75 (sous forme d'un mélange de disulfure - à 75% en poids - et de polysulfures), ou encore par la société Witco sous la dénomination Silquest A1589. Le TESPT est commercialisé par exemple par la société Degussa sous la dénomination Si69 (ou X50S lorsqu'il est supporté à 50% en poids sur du noir de carbone), ou encore par la société Osi Specialties sous la dénomination Silquest A1289 (dans les deux cas, mélange commercial de polysulfures avec une valeur moyenne pour n qui est proche de 4).

On citera également comme exemples d'agent de couplage avantageux les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande WO 02/083782 précitée.

A titre d'exemples d'agents de couplage autres que les alkoxysilanes polysulfurés précités, on citera notamment des polyorganosiloxanes bifonctionnels tels que décrits dans les demandes WO99/02602 ou WO 01/96442 précitées, ou encore les polysulfures d'hydroxysilane tels que décrits dans les demandes WO 02/30939 et WO 02/31041 précitées.

Les compositions selon l'invention contiennent, outre la matrice élastomère, ladite charge renforçante et éventuellement un agent de liaison charge inorganique renforçante/ élastomère(s), tout ou partie des autres additifs habituellement utilisés dans les mélanges de caoutchouc, comme des plastifiants, pigments, antioxydants, cires anti-ozonantes, un système de réticulation à base soit de soufre et/ou peroxyde et/ou de bismaléimides, des accélérateurs de réticulation, des huiles d'extension, éventuellement un ou des agents de recouvrement de la charge inorganique renforçante, tels que des alcoxysilanes, polyols, amines, etc.

Une bande de roulement pour pneumatique selon l'invention est telle qu'elle comprend une composition de caoutchouc réticulable ou réticulée telle que définie ci-dessus.

Une enveloppe de pneumatique selon l'invention est telle qu'elle comporte cette bande de roulement.

Les caractéristiques précitées de la présente invention, ainsi que d'autres, seront mieux comprises à la lecture de la description suivante de plusieurs exemples de réalisation de l'invention, donnés à titre illustratif et non limitatif.
- Dans les exemples ci-après, la viscosité Mooney ML (1+4) à 100° C est mesurée selon la norme ASTM D 1646 de 1999, en abrégé ML.
- On a utilisé la technique SEC (chromatographie d'exclusion par la taille) pour déterminer les masses moléculaires moyennes en nombre Mn des copolymères obtenus. Selon cette technique, on sépare physiquement les macromolécules suivant leurs tailles respectives à l'état gonflé, dans des colonnes remplies d'une phase stationnaire poreuse.

On utilise pour la séparation précitée un chromatographe commercialisé sous la dénomination « WATERS » et sous le modèle « 150C ». On utilise un jeu de deux colonnes « WATERS » dont le type est « STYRAGEL HT6E ».
- On a par ailleurs utilisé la technique de résonance magnétique nucléaire du carbone 13 (RMN¹³C) pour déterminer des caractéristiques de microstructure relatives aux élastomères obtenus. Le détail de cette caractérisation est explicité ci-après.

Les analyses RMN ¹³C sont réalisées sur un spectromètre « Bruker AM250 ». La fréquence nominale du carbone 13 est de 62,9 MHz. Pour être quantitatifs, les spectres sont enregistrés sans effet « Overhauser Nucléaire » (NOE). La largeur spectrale est de 240 ppm. L'impulsion d'angle utilisée est une impulsion à 90° dont la durée est de 5 µs. Un découplage à basse puissance et à large bande de proton est utilisé pour éliminer les couplages scalaires ¹H-¹³C durant l'acquisition ¹³C. Le temps de répétition de la séquence est de 4 secondes. Le nombre de transitoires accumulés pour augmenter le rapport signal/bruit est de 8192. Les spectres sont calibrés sur la bande du CDCl₃ à 77 ppm.
- On a également utilisé la technique de dosage appelée « proche infrarouge » (NIR), méthode indirecte faisant appel à des élastomères « témoin » dont la microstructure a été mesurée par la technique de RMN¹³C. On utilise la relation quantitative (loi de Beer-Lambert) existant entre la répartition des monomères dans un élastomère et la forme du spectre NIR de celui-ci. Cette technique est mise en oeuvre en deux étapes :

### a) Etalonnage :

- On procède à l'acquisition des spectres respectifs des élastomères « témoin ».
- On établit un modèle mathématique associant une microstructure à un spectre donné, ceci à l'aide de la méthode de régression PLS (Partial Least Squares) reposant sur une analyse factorielle des données spectrales.. Les deux documents suivants traitent d'une manière approfondie de la théorie et de la mise en oeuvre de cette méthode d'analyse de données « multi-variées » :
   (1) P. GELADI et B. R. KOWALSKI
      « Partial Least Squares regression : a tutorial », Analytica Chimica Acta, vol. 185, 1-17 (1986).
   (2) M. TENENHAUS
      « La régression PLS - Théorie et pratique » Paris, Editions Technip (1998).

### 2) Mesure :

- On procède à un enregistrement du spectre de l'échantillon.
- On réalise le calcul de la microstructure.

### EXEMPLES :

### Copolymères A et A' couplés selon l'invention à trois blocs IR-SBR-IR, en comparaison de copolymères B et C « témoin » non couplés.

### 1) Préparation d'un copolymère A à trois blocs IR-SBR-IR couplé selon l'invention :

### - Préparation d'un co-catalyseur inclus dans un système catalytique selon l'invention :

Dans une bouteille de 0,25 l maintenue sous azote, on introduit 15 ml de cyclohexane, 3,8.10⁻³ mol d'éthyldiglycolate de baryum (composant B en solution dans le cyclohexane) et 13,3.10-³ mol de trioctylaluminium (composant A en solution dans le cyclohexane). Ce mélange est agité pendant 20 min. à 40° C, et il forme ledit co-catalyseur.

### - Préparation de l'initiateur polymère C formé d'un polyisoprène lithié :

Dans une bouteille de 0,25 l maintenue sous azote, on introduit 154 ml de cyclohexane et 44 ml (30 g) d'isoprène. 3.10⁻³ mol de s-BuLi sont ajoutées et la polymérisation est conduite à 50° C pendant 45 min. Le polyisoprène lithié de Mn=10 000 g/mol ainsi obtenu est conservé sous azote au congélateur à -20° C.

### - Copolymérisation à l'aide du système catalytique selon l'invention :

Dans une bouteille « témoin » de 0,25 l maintenue sous azote et dans une autre bouteille identique destinée à la mise en oeuvre de l'invention, on introduit du cyclohexane (154 ml), du butadiène et du styrène, selon les rapports massiques respectifs 1/ 0,108/ 0,100. On ajoute 0,75 ml dudit co-catalyseur (soit 75 µmol d'équivalent baryum), puis 176 µmol dudit polyisoprène lithié. La polymérisation est conduite dans chacune des deux bouteilles à 80° C, et le taux de monomère converti est de 78 % au bout de 35 min. Ce taux est déterminé par pesée d'un extrait séché à 110° C, sous la pression réduite de 200 mmHg.

Dans la bouteille « témoin » contenant le produit de polymérisation, on stoppe celle-ci avec un excès de méthanol par rapport au lithium. La viscosité inhérente mesurée (viscosité « initiale ») est de 1,25 dl/g.

### - Couplage à l'aide d'un agent de couplage selon l'invention :

Dans l'autre bouteille contenant ce même produit de polymérisation, on injecte une solution de bis(4-glycidyloxyphényl)méthane (105 µmol).

Le rapport bis(4-glycidyloxyphényl)méthane / Li est donc de 0,60. Après 15 min. de réaction à 80° C, on stoppe la réaction de couplage avec un excès de méthanol par rapport au lithium. La viscosité inhérente « finale » mesurée est de 1,82 dl/g.

Le saut de viscosité, défini comme le rapport de ladite viscosité « finale » sur ladite viscosité « initiale », est ici de 1,45. La viscosité ML du polymère ainsi couplé est de 47.

On soumet le copolymère A à trois blocs IR-SBR-IR ainsi obtenu à un traitement anti-oxydant par addition de 0,5 parties pour cent parties d'élastomères (pce) de 4,4'-méthylène-bis-2,6-tert-butylphénol et de 0,3 parties pour cent parties d'élastomères (pce) de N-(1,3-diméthylbutyl)-N'-phényl-p-phénylènediamine. On récupère ce copolymère par séchage en étuve à 50° C sous courant d'azote.

La masse moléculaire Mn de ce copolymère A, déterminée par la technique SEC, est de 101 000 g/mol. Le taux de polyisoprène libre résiduel estimé par SEC est inférieur à 2%.

La microstructure de ce copolymère A est déterminée par la technique de RMN ¹³C
le taux massique de BR 1,4-trans est de 79 %, celui de BR 1,4-cis est de 16 % et celui de BR 1,2 est de 5 % (chacun de ces trois taux se rapporte aux unités butadiène) ;
le taux massique de styrène est de 29 % ;
le taux massique de motifs IR 3,4 est de 8 %, celui des motifs IR 1,4-trans est de 24 % et celui des motifs IR 1,4-cis est de 68 % (ces trois taux se rapportent au bloc polyisoprène).

Enfin, la fraction massique de ce bloc IR dans ce copolymère A est de 9,7 %.

### 2) Préparation d'un copolymère A' à trois blocs IR-SBR-IR couplé selon l'invention :

### - Préparation d'un co-catalyseur inclus dans un système catalytique selon l'invention :

Dans une bouteille de 0,25 1 maintenue sous azote, on introduit 15 ml de cyclohexane, 3,8.10⁻³ mol d'éthyldiglycolate de baryum (composant B en solution dans le cyclohexane) et 13,3.10⁻³ mol de trioctylaluminium (composant A en solution dans le cyclohexane). Ce mélange est agité pendant 20 min. à 40° C, et il forme ledit co-catalyseur.

### - Préparation de l'initiateur polymère C formé d'un polyisoprène lithié :

Dans une bouteille de 0,25 1 maintenue sous azote, on introduit 154 ml de cyclohexane et 44 ml (30 g) d'isoprène. 3.10⁻³ mol de s-BuLi sont ajoutées et la polymérisation est conduite à 50° C pendant 45 min. Le polyisoprène lithié de Mn=10 000 g/mol ainsi obtenu est conservé sous azote au congélateur à -20° C.

### - Copolymérisation à l'aide du système catalytique selon l'invention :

Dans une bouteille « témoin » de 0,25 1 maintenue sous azote et dans une autre bouteille identique destinée à la mise en oeuvre de l'invention, on introduit du cyclohexane (154 ml), du butadiène et du styrène, selon les rapports massiques respectifs 1/ 0,125/ 0,083. On ajoute 0,87 ml dudit co-catalyseur (soit 87,5 µmol d'équivalent baryum), puis 206 µmol dudit polyisoprène lithié. La polymérisation est conduite dans chacune des deux bouteilles à 80° C, et le taux de monomère converti est de 75 % au bout de 30 min. Ce taux est déterminé par pesée d'un extrait séché à 110° C, sous la pression réduite de 200 mmHg.

Dans la bouteille « témoin » contenant le produit de polymérisation, on stoppe celle-ci avec un excès de méthanol par rapport au lithium. La viscosité inhérente mesurée (viscosité « initiale ») est de 1,26 dl/g.

### - Couplage à l'aide d'un autre agent de couplage selon l'invention :

Dans l'autre bouteille contenant ce même produit de polymérisation, on injecte une solution de 1,3-butadiènediépoxyde (123 µmol).

Le rapport 1,3-butadiènediépoxyde / Li est donc de 0,60. Après 15 min. de réaction à 80° C, on stoppe la réaction de couplage avec un excès de méthanol par rapport au lithium. La viscosité inhérente « finale » mesurée est de 1,75 dl/g.

Le saut de viscosité, défini comme le rapport de ladite viscosité « finale » sur ladite viscosité « initiale », est ici de 1,39. La viscosité ML du polymère ainsi couplé est de 50.

On soumet le copolymère A' à trois blocs IR-SBR-IR ainsi obtenu à un traitement anti-oxydant par addition de 0,5 parties pour cent parties d'élastomères (pce) de 4,4'-méthylène-bis-2,6-tert-butylphénol et de 0,3 parties pour cent parties d'élastomères (pce) de N-(1,3-diméthylbutyl)-N'-phényl-p-phénylènediainine. On récupère ce copolymère par séchage en étuve à 50° C sous courant d'azote.

La masse moléculaire Mn de ce copolymère A', déterminée par la technique SEC, est de 94 000 g/mol. Le taux de polyisoprène libre résiduel estimé par SEC est inférieur à 2%.

La microstructure de ce copolymère A' est déterminée par la technique de RMN ¹³C :
le taux massique de BR 1,4-trans est de 79 %, celui de BR 1,4-cis est de 16 % et celui de BR 1,2 est de 5 % (chacun de ces trois taux se rapporte aux unités butadiène) ;
le taux massique de styrène est de 23 % ;
le taux massique de motifs IR 3,4 est de 8 %, celui des motifs IR 1,4-trans est de 24 % et celui des motifs IR 1,4-cis est de 68 % (ces trois taux se rapportent au bloc polyisoprène).

Enfin, la fraction massique de ce bloc IR dans ce copolymère A est de 10 %.

### 3) Préparation d'un copolymère B "témoin" à blocs IR-SBR non couplé :

### - Préparation d'un co-catalyseur inclus dans un système catalytique selon l'invention :

Dans une bouteille de 0,25 1 maintenue sous azote, on introduit 15 ml de cyclohexane, 3,8.10⁻³ mol d'éthyldiglycolate de baryum (composant B en solution dans le cyclohexane) et 13,3.10⁻³ mol de trioctylaluminium (composant A en solution dans le cyclohexane). Ce mélange est agité pendant 20 min. à 40° C, et il forme ledit co-catalyseur.

### - Préparation de l'initiateur polymère C formé d'un polyisoprène lithié :

Dans une bouteille de 0,25 1 maintenue sous azote, on introduit 154 ml de cyclohexane et 44 ml (30 g) d'isoprène. 3_{:}10⁻³ mol de s-BuLi sont ajoutées et la polymérisation est conduite à 50° C pendant 45 min. Le polyisoprène lithié de Mn=10 000 g/mol ainsi obtenu est conservé sous azote au congélateur à -20° C.

### - Copolymérisation à l'aide du système catalytique selon l'invention :

Dans une bouteille de 0,25 1 maintenue sous azote, on introduit du cyclohexane (154 ml), du butadiène et du styrène, selon les rapports massiques respectifs 1/ 0,108/ 0,100. On ajoute 0,49 ml dudit co-catalyseur (soit 50 µmol d'équivalent baryum), puis 118 µmol dudit polyisoprène lithié. La polymérisation est conduite à 80° C, et le taux de monomère converti est de 68 % au bout de 40 min. Ce taux est déterminé par pesée d'un extrait séché à 110° C, sous la pression réduite de 200 mmHg. On stoppe la polymérisation avec un excès de méthanol par rapport au lithium. La viscosité inhérente mesurée est de 1,53 dl/g. La viscosité ML du copolymère B à deux blocs obtenu est de 53.

On soumet ce copolymère B à blocs IR-SBR à un traitement anti-oxydant par addition de 0,35 parties pour cent parties d'élastomères (pce) de 4,4'-méthylène-bis-2,6-tert-butylphénol et de 0,10 pce de N-(1,3-diméthylbutyl)-N'-phényl-p-phénylènediamine. On récupère ce copolymère par séchage en étuve à 60° C sous courant d'azote.

La masse moléculaire Mn de ce copolymère B, déterminée par la technique SEC, est de 100 000 g/mol. Le taux de polyisoprène libre résiduel estimé par SEC est inférieur à 2%.

La microstructure de ce copolymère A est déterminée par la technique de RMN ¹³C :
le taux massique de BR 1,4-trans est de 79 %, celui de BR 1,4-cis est de 16 % et celui de BR 1,2 est de 5 % (chacun de ces trois taux se rapporte aux unités butadiène) ;
le taux massique de styrène est de 32 % ;
le taux massique de motifs IR 3,4 est de 8 %, celui des motifs IR 1,4-trans est de 24 % et celui des motifs IR 1,4-cis est de 68 % (ces trois taux se rapportent au bloc polyisoprène).

Enfin, la fraction massique de ce bloc IR dans ce copolymère A est de 5,5 %.

### 4) Préparation d'un copolymère C "témoin" SBR non couplé:

Ce SBR C « témoin » est préparé par une copolymérisation du styrène et du butadiène mise en oeuvre selon le § 3) ci-dessus, à ceci près que la copolymérisation est initiée au moyen de n-butyl lithium à titre d'initiateur lithié, à la place du polyisoprène lithié précité (le co-catalyseur utilisé étant le même que précédemment).

Dans une bouteille de 0,25 1 maintenue sous azote, on introduit du cyclohexane (154 ml), du butadiène et du styrène, selon les rapports massiques respectifs 1/ 0,108/ 0,100. On ajoute 0,85 ml dudit co-catalyseur (soit 85 µmol d'équivalent baryum), puis 234 µmol de n-butyl lithium. La polymérisation est conduite à 80° C, et le taux de monomère converti est de 50 % au bout de 22 min. Ce taux est déterminé par pesée d'un extrait séché à 110° C, sous la pression réduite de 200 mmHg. On stoppe la polymérisation avec un excès de méthanol par rapport au lithium. La viscosité inhérente mesurée est de 1,59 dl/g. La viscosité ML du copolymère SBR C obtenu est de 49.

Le SBR C obtenu est soumis au traitement anti-oxydant précité et aux mêmes opérations de séchage.

La masse moléculaire Mn de ce SBR C, déterminée par la technique SEC, est de 110000 g/mol.

La microstructure de ce SBR C « témoin » est déterminée par la technique de spectroscopie proche infrarouge (NIR) :
le taux massique de BR 1,4-trans est de 84 %, celui de BR 1,4-cis est de 13 % et celui de BR 1,2 est de 3 % (chacun de ces trois taux se rapporte aux unités butadiène).
Le taux massique de styrène est de 27 %.

## Revendications

1. Procédé de préparation d'un copolymère à blocs fonctionnalisé, couplé ou étoilé qui est utilisable dans une composition de caoutchouc réticulable au soufre comprenant du noir de carbone et d'hystérèse réduite à l'état réticulé, l'un au moins desdits blocs étant constitué d'un polyisoprène et au moins un autre bloc étant constitué d'un élastomère diénique autre qu'un polyisoprène dont le taux molaire d'unités issues d'un ou de diènes conjugués est supérieur à 15 %, **caractérisé en ce que** ledit procédé comprend :
(i) la copolymérisation d'un ou plusieurs monomères comprenant au moins un diène conjugué autre que l'isoprène à l'aide d'un système catalytique comprenant un solvant hydrocarboné, un composé A d'un métal du groupe IIIA, un composé B d'un métal alcalino-terreux et un initiateur polymère C comportant une liaison C-Li qui est constitué d'un polyisoprène non fonctionnalisé monolithié destiné à former ledit ou chaque bloc polyisoprène, le(s)dit(s) bloc(s) polyisoprène présentant une masse moléculaire moyenne en nombre Mₙ₁ comprise entre 2 500 et 20 000 g/mol, pour que le(s)dit(s) bloc(s) constitué(s) d'un élastomère diénique autre qu'un polyisoprène présente une teneur en enchaînements 1,4-trans égale ou supérieure à 70 % et une masse moléculaire moyenne en nombre Mₙ₂ comprise entre 65 000 et 350 000 g/mol, et
(ii) l'ajout au produit de ladite copolymérisation d'un agent de fonctionnalisation, de couplage ou d'étoilage comportant respectivement un, deux ou au moins trois groupes époxy, pour que ledit bloc constitué d'un élastomère diénique autre qu'un polyisoprène soit fonctionnalisé, couplé ou étoilé.

2. Procédé de préparation d'un copolymère à blocs fonctionnalisé, couplé ou étoilé selon la revendication 1, **caractérisé en ce que** ledit agent de fonctionnalisation, de couplage ou d'étoilage comporte respectivement un, deux ou au moins trois groupes glycidyl.

3. Procédé de préparation d'un copolymère à blocs fonctionnalisé, couplé ou étoilé selon la revendication 2, **caractérisé en ce que** ledit agent de fonctionnalisation, de couplage ou d'étoilage comporte respectivement un, deux ou au moins trois groupes glycidyl éther.

4. Procédé de préparation d'un copolymère à blocs fonctionnalisé, couplé ou étoilé selon la revendication 3, **caractérisé en ce que** ledit ou chaque groupe glycidyl éther est lié à un groupe alkyl, cycloalkyl, aryl ou aralkyl.

5. Procédé de préparation d'un copolymère à blocs fonctionnalisé selon une des revendications 1 à 4, **caractérisé en ce qu'**il comprend l'ajout dudit agent de fonctionnalisation qui comporte un groupe monoépoxy, tel qu'un groupe monoglycidyl éther, pour l'obtention d'un copolymère linéaire à deux blocs.

6. Procédé de préparation d'un copolymère à blocs couplé selon une des revendications 1 à 4, **caractérisé en ce qu'**il comprend l'ajout dudit agent de couplage qui comporte un groupe diépoxy, tel qu'un groupe bis(glycidyl éther), pour l'obtention d'un copolymère linéaire à trois blocs dont les deux blocs d'extrémité sont chacun constitués d'un polyisoprène.

7. Procédé de préparation d'un copolymère à blocs couplé selon la revendication 6, **caractérisé en ce que** ledit agent de couplage est le bis(4-glycidyloxyphényl)méthane.

8. Procédé de préparation d'un copolymère à blocs étoilé selon une des revendications 1 à 4, **caractérisé en ce qu'**il comprend l'ajout dudit agent d'étoilage qui comporte un groupe à n fonctions époxy avec n entier naturel égal ou supérieur à 3, pour l'obtention d'un copolymère ramifié à n branches, chaque branche comportant deux blocs parmi lesquels le bloc d'extrémité est constitué d'un polyisoprène.

9. Procédé de préparation d'un copolymère à blocs étoilé selon la revendication 8, **caractérisé en ce que** ledit agent d'étoilage comporte un groupe tétraépoxy, pour l'obtentions d'un copolymère ramifié à 4 branches.

10. Procédé de préparation d'un copolymère à blocs étoilé selon la revendication 9, **caractérisé en ce que** ledit agent d' étoilage est le bis(4-(diglycidylamino)phényl)méthane.

11. Procédé de préparation d'un copolymère à blocs étoilé selon la revendication 8, **caractérisé en ce que** ledit agent d'étoilage comporte plus de 4 fonctions époxy reliées entre elles par des atomes d'azote.

12. Procédé de préparation d'un copolymère à blocs fonctionnalisé, couplé ou étoilé selon une des revendications précédentes, **caractérisé en ce que** l'ajout dudit agent de fonctionnalisation, de couplage ou d'étoilage est réalisé de telle manière que le rapport molaire (agent de fonctionnalisation, couplage ou étoilage / Li) soit compris entre 0,2 et 1.

13. Procédé de préparation d'un copolymère à blocs fonctionnalisé, couplé ou étoilé selon une des revendications précédentes, **caractérisé en ce que** le rapport desdites masses moléculaires moyennes en nombre Mₙ₁ / Mₙ₂ est compris entre 5 et 20 %.

14. Procédé de préparation d'un copolymère à blocs fonctionnalisé, couplé ou étoilé selon une des revendications 1 à 13, **caractérisé en ce que** ledit système catalytique comprend un co-catalyseur, résultant du produit de réaction dans ledit solvant hydrocarboné dudit composé A et dudit composé B, et ledit initiateur polymère C.

15. Procédé de préparation d'un copolymère à blocs fonctionnalisé, couplé ou étoilé selon la revendication 14, **caractérisé en ce qu'**il comprend :
- dans une première étape, la préparation dudit co-catalyseur en faisant réagir l'un avec l'autre lesdits composés métalliques A et B dans ledit solvant hydrocarboné, puis
- dans une seconde étape, la mise en contact dudit co-catalyseur avec le milieu de polymérisation comprenant ledit ou lesdits monomères à copolymériser en solution dans un solvant de polymérisation, à l'exclusion dudit initiateur polymère C, puis
- dans une troisième étape, la réaction du mélange obtenu à ladite seconde étape par l'intermédiaire dudit initiateur polymère C, puis
- dans une quatrième étape, l'ajout dudit agent de fonctionnalisation, de couplage ou d'étoilage au produit de la copolymérisation,
et **en ce qu'**il comprend le stoppage ultérieur de la réaction de fonctionnalisation, de couplage ou d'étoilage pour obtenir ledit copolymère à blocs fonctionnalisé, couplé ou étoilé.

16. Procédé de préparation d'un copolymère à blocs fonctionnalisé, couplé ou étoilé selon la revendication 14, **caractérisé en ce qu'**il comprend :
- dans une première étape, la préparation dudit co-catalyseur en faisant réagir l'un avec l'autre lesdits composés métalliques A et B dans ledit solvant hydrocarboné, puis
- dans une seconde étape, l'ajout dudit initiateur polymère C au co-catalyseur obtenu à la première étape, puis
- dans une troisième étape, l'ajout du système catalytique ainsi obtenu au milieu de polymérisation comprenant ledit ou lesdits monomères à copolymériser en solution dans un solvant de polymérisation, puis
- dans une quatrième étape, l'ajout dudit agent de fonctionnalisation, de couplage ou d'étoilage au produit de la copolymérisation,
et **en ce qu'**il comprend le stoppage ultérieur de la réaction de fonctionnalisation, de couplage ou d'étoilage pour obtenir ledit copolymère à blocs fonctionnalisé, couplé ou étoilé.

17. Procédé de préparation d'un copolymère à blocs fonctionnalisé, couplé ou étoilé selon une des revendications 1 à 13, **caractérisé en ce qu'**il comprend :
- dans une première étape, un pré-mélange desdits composés A et C dans ledit solvant hydrocarboné, puis
- dans une seconde étape, l'ajout de ce pré-mélange au milieu de polymérisation comprenant ledit ou lesdits monomères à copolymériser en solution dans un solvant de polymérisation, puis
- dans une troisième étape, l'ajout dudit composé B au mélange obtenu à ladite seconde étape, puis
- dans une quatrième étape, l'ajout dudit agent de fonctionnalisation, de couplage ou d'étoilage au produit de la copolymérisation,
et **en ce qu'**il comprend le stoppage ultérieur de la réaction de fonctionnalisation, de couplage ou d'étoilage pour obtenir ledit copolymère à blocs fonctionnalisé, couplé ou étoilé.

18. Procédé de préparation d'un copolymère à blocs fonctionnalisé, couplé ou étoilé selon une des revendications précédentes, **caractérisé en ce que** ledit composé A est un trialkyl-aluminium dont le nombre d'atomes de carbone varie de 1 à 12, tel que le trioctyl-aluminium.

19. Procédé de préparation d'un copolymère à blocs fonctionnalisé, couplé ou étoilé selon une des revendications précédentes, **caractérisé en ce que** ledit composé B est un alcoolate de baryum, de strontium ou de calcium, tel que l'éthyl diglycolate ou le nonylphénoxyde de baryum.

20. Procédé de préparation d'un copolymère à blocs fonctionnalisé, couplé ou étoilé selon la revendication 15 ou 16, **caractérisé en ce que** ladite première étape comprend la réalisation d'un pré-mélange desdits composés A et B dans ledit solvant hydrocarboné de telle manière que le rapport molaire A/B soit compris entre 0,5 et 5, puis le chauffage dudit pré-mélange à une température comprise entre 20° C et 120° C.

21. Procédé de préparation d'un copolymère à blocs fonctionnalisé, couplé ou étoilé selon une des revendications précédentes, **caractérisé en ce que** ledit solvant hydrocarboné comprend du toluène et/ou du cyclohexane.

22. Procédé de préparation d'un copolymère à blocs fonctionnalisé, couplé ou étoilé selon une des revendications précédentes, **caractérisé en ce que** le rapport molaire (composé C / composé B) est compris entre 0,2 et 4.

23. Procédé de préparation d'un copolymère à blocs fonctionnalisé, couplé ou étoilé selon une des revendications précédentes, **caractérisé en ce que** ledit élastomère diénique constituant ledit ou chaque bloc autre qu'un polyisoprène est un copolymère du butadiène et d'un vinylaromatique, tel que le styrène.

24. Copolymère à blocs fonctionnalisé, couplé ou étoilé qui est utilisable dans une composition de caoutchouc réticulable au soufre comprenant du noir de carbone à titre de charge renforçante et d'hystérèse réduite à l'état réticulé, l'un au moins desdits blocs étant constitué d'un polyisoprène et au moins un autre bloc étant constitué d'un élastomère diénique autre qu'un polyisoprène dont le taux molaire d'unités issues d'un ou de diènes conjugués est supérieur à 15 %, **caractérisé en ce que** :
- ledit bloc constitué d'un élastomère diénique autre qu'un polyisoprène est fonctionnalisé, couplé ou étoilé au moyen d'un agent de fonctionnalisation, de couplage ou d'étoilage comportant respectivement un, deux ou au moins trois groupes époxy, et **en ce que**
- le(s)dit(s) bloc(s) polyisoprène présentent une masse moléculaire moyenne en nombre Mₙ₁ comprise entre 2 500 et 20 000 g/mol, le(s)dit(s) bloc(s) constitué(s) d'un élastomère diénique autre qu'un polyisoprène présentant une masse moléculaire moyenne en nombre Mₙ₂ comprise entre 65 000 et 350 000 g/mol et une teneur en enchaînements 1,4-trans égale ou supérieure à 70 %.

25. Copolymère à blocs fonctionnalisé selon la revendication 24, **caractérisé en ce que** ledit agent de fonctionnalisation comporte un groupe monoépoxy, tel qu'un groupe monoglycidyl éther, de sorte que ledit copolymère soit linéaire à deux blocs.

26. Copolymère à blocs couplé selon la revendication 24, **caractérisé en ce que** ledit agent de couplage comporte un groupe diépoxy, tel qu'un groupe bis(glycidyl éther), de sorte que ledit copolymère soit linéaire à trois blocs, les deux blocs d'extrémité étant chacun constitués d'un polyisoprène.

27. Copolymère à blocs couplé selon la revendication 26, **caractérisé en ce que** ledit agent de couplage est le bis(4-glycidyloxyphényl)méthane.

28. Copolymère à blocs étoilé selon la revendication 24, **caractérisé en ce que** ledit agent d'étoilage comporte un groupe à n fonctions époxy avec n entier naturel égal ou supérieur à 3, de sorte que ledit copolymère soit ramifié à n branches, chaque branche comportant deux blocs parmi lesquels le bloc d'extrémité est constitué d'un polyisoprène.

29. Copolymère à blocs étoilé selon la revendication 28, **caractérisé en ce que** ledit agent d'étoilage comporte un groupe tétraépoxy, pour l'obtention d'un copolymère ramifié à 4 branches.

30. Copolymère à blocs étoilé selon la revendication 29, **caractérisé en ce que** ledit agent d'étoilage est le bis(4-(diglycidylamino)phényl)méthane.

31. Copolymère à blocs étoilé selon la revendication 28, **caractérisé en ce que** ledit agent d'étoilage comporte plus de 4 fonctions époxy reliées entre elles par des atomes d'azote.

32. Copolymère à blocs fonctionnalisé, couplé ou étoilé selon une des revendications 24 à 31, **caractérisé en ce que** le rapport desdites masses moléculaires moyennes en nombre Mₙ₁ / Mₙ₂ est compris entre 5 et 20 %.

33. Copolymère à blocs fonctionnalisé, couplé ou étoilé selon une des revendications 24 à 32, **caractérisé en ce que** ledit élastomère diénique constituant ledit ou chaque bloc autre qu'un polyisoprène est un copolymère du butadiène et d'un vinylaromatique, tel que le styrène.

34. Copolymère à blocs fonctionnalisé, couplé ou étoilé selon une des revendications 24 à 33, **caractérisé en ce que** ledit ou chaque bloc polyisoprène présente un taux d'enchaînements vinyliques 3,4 et 1,2 qui est sensiblement compris entre 1 et 20 %.

35. Composition de caoutchouc réticulable ou réticulée, présentant une hystérèse réduite à l'état réticulé et utilisable pour constituer une bande de roulement d'enveloppe de pneumatique, ladite composition comprenant une charge renforçante constituée en tout ou partie de noir de carbone, **caractérisée en ce qu'**elle comprend un copolymère à blocs fonctionnalisé, couplé ou étoilé selon une des revendications 24 à 34.

36. Composition de caoutchouc selon la revendication 35, **caractérisée en ce qu'**elle comprend ledit copolymère à blocs selon une quantité supérieure à 50 pce et allant jusqu'à 100 pce (pce : parties en poids pour cent parties d'élastomère(s)).

37. Composition de caoutchouc selon la revendication 36, **caractérisée en ce qu'**elle comprend ledit copolymère à blocs selon une quantité de 100 pce.

38. Composition de caoutchouc selon une des revendications 35 à 37, **caractérisée en ce que** ladite charge renforçante comprend du noir de carbone à titre majoritaire.

39. Composition de caoutchouc selon une des revendications 35 à 38, **caractérisée en ce que** ladite charge renforçante comprend du noir de carbone selon une quantité supérieure à 40 pce (pce : parties en poids pour cent parties d'élastomère(s)).

40. Bande de roulement d'enveloppe de pneumatique utilisable pour réduire la résistance au roulement d'une enveloppe de pneumatique l'incorporant, **caractérisée en ce qu'**elle comprend une composition de caoutchouc selon une des revendications 35 à 39.

41. Enveloppe de pneumatique présentant une résistance au roulement réduite, **caractérisée en ce qu'**elle comporte une bande de roulement selon la revendication 40.

## Claims

1. A process for the preparation of a functionalised, coupled or starred block copolymer which is usable in a sulphur-cross-linkable rubber composition comprising carbon black and of reduced hysteresis in the cross-linked state, one at least of said blocks consisting of a polyisoprene and at least one other block consisting of a diene elastomer other than a polyisoprene the molar ratio of units originating from one or more conjugated dienes of which is greater than 15%, **characterised in that** said process comprises:
(i) the copolymerisation of one or more monomers comprising at least one conjugated diene other than isoprene using a catalytic system comprising a hydrocarbon solvent, a compound A of a metal of group IIIA, a compound B of an alkaline-earth metal and a polymer initiator C comprising a C-Li bond which is formed of a monolithiated non-functionalised polyisoprene intended to form said or each polyisoprene block, said polyisoprene block(s) having a number-average molecular weight Mₙ₁ of between 2,500 and 20,000 g/mol, so that said block(s) formed of a diene elastomer other than a polyisoprene has/have a content of trans-1,4 linkages equal to or greater than 70% and a number-average molecular weight Mₙ₂ of between 65,000 and 350,000 g/mol, and
(ii) the addition to the product of said copolymerisation of a functionalising, coupling or starring agent comprising one, two or at least three epoxy groups respectively, so that said block formed of a diene elastomer other than a polyisoprene is functionalised, coupled or starred.

2. A process for the preparation of a functionalised, coupled or starred block copolymer according to Claim 1, **characterised in that** said functionalising, coupling or starring agent comprises one, two or at least three glycidyl groups respectively.

3. A process for the preparation of a functionalised, coupled or starred block copolymer according to Claim 2, **characterised in that** said functionalising, coupling or starring agent comprises one, two or at least three glycidyl ether groups respectively.

4. A process for the preparation of a functionalised, coupled or starred block copolymer according to Claim 3, **characterised in that** said or each glycidyl ether group is linked to an alkyl, cycloalkyl, aryl or aralkyl group.

5. A process for the preparation of a functionalised block copolymer according to one of Claims 1 to 4, **characterised in that** it comprises the addition of said functionalising agent which comprises a monoepoxy group, such as a monoglycidyl ether group, for obtaining a linear copolymer with two blocks.

6. A process for the preparation of a coupled block copolymer according to one of Claims 1 to 4, **characterised in that** it comprises the addition of said coupling agent which comprises a diepoxy group, such as a bis(glycidyl ether) group, to obtain a linear copolymer with three blocks, the two end blocks of which each consist of a polyisoprene.

7. A process for the preparation of a coupled block copolymer according to Claim 6, **characterised in that** said coupling agent is bis(4-glycidyloxyphenyl)methane.

8. A process for the preparation of a starred block copolymer according to one of Claims 1 to 4, **characterised in that** it comprises the addition of said starring agent which comprises a group having n epoxy functions with n being a natural integer equal to or greater than 3, to obtain a branched copolymer with n branches, each branch comprising two blocks of which the end block consists of a polyisoprene.

9. A process for the preparation of a starred block copolymer according to Claim 8, **characterised in that** said starring agent comprises a tetraepoxy group for obtaining a branched copolymer with 4 branches.

10. A process for the preparation of a starred block copolymer according to Claim 9, **characterised in that** said starring agent is bis(4-(diglycidylamino)phenyl)methane.

11. A process for the preparation of a starred block copolymer according to Claim 8, **characterised in that** said starring agent comprises more than 4 epoxy functions interconnected by nitrogen atoms.

12. A process for the preparation of a functionalised, coupled or starred block copolymer according to one of the preceding claims, **characterised in that** the addition of said functionalising, coupling or starring agent is carried out such that the molar ratio (functionalising, coupling or starring agent / Li) is between 0.2 and 1.

13. A process for the preparation of a functionalised, coupled or starred block copolymer according to one of the preceding claims, **characterised in that** the ratio of said number-average molecular weights Mₙ₁ / Mₙ₂ is between 5 and 20%.

14. A process for the preparation of a functionalised, coupled or starred block copolymer according to one of Claims 1 to 13, **characterised in that** said catalytic system comprises a co-catalyst, resulting from the product of reaction in said hydrocarbon solvent of said compound A and said compound B, and said polymer initiator C.

15. A process for the preparation of a functionalised, coupled or starred block copolymer according to Claim 14, **characterised in that** it comprises:
- in a first step, preparing said co-catalyst by reacting said metal compounds A and B with each other in said hydrocarbon solvent, then
- in a second step, contacting said co-catalyst with the polymerisation medium comprising said monomer(s) which is/are to be copolymerised in solution in a polymerisation solvent, with the exclusion of said polymer initiator C, then
- in a third step, reacting the mixture obtained in said second step by means of said polymer initiator C, then
- in a fourth step, adding said functionalising, coupling or starring agent to the product of the copolymerisation,
and **in that** it comprises the later stopping of the functionalisation, coupling or starring reaction in order to obtain said functionalised, coupled or starred block copolymer.

16. A process for the preparation of a functionalised, coupled or starred block copolymer according to Claim 14, **characterised in that** it comprises:
- in a first step, preparing said co-catalyst by reacting said metal compounds A and B with each other in said hydrocarbon solvent, then
- in a second step, adding said polymer initiator C to the co-catalyst obtained in the first step, then
- in a third step, adding the catalytic system thus obtained to the polymerisation medium comprising said monomer(s) to be copolymerised in solution in a polymerisation solvent, then
- in a fourth step, adding said functionalising, coupling or starring agent to the product of the copolymerisation,
and **in that** it comprises the later stopping of the functionalisation, coupling or starring reaction in order to obtain said functionalised, coupled or starred block copolymer.

17. A process for the preparation of a functionalised, coupled or starred block copolymer according to one of Claims 1 to 13, **characterised in that** it comprises:
- in a first step, a premix of said compounds A and C in said hydrocarbon solvent, then
- in a second step, adding this premix to the polymerisation medium comprising said monomer(s) to be copolymerised in solution in a polymerisation solvent, then
- in a third step, adding said compound B to the mixture obtained in said second step, then
- in a fourth step, adding said functionalising, coupling or starring agent to the product of the copolymerisation,
and **in that** it comprises the later stopping of the functionalisation, coupling or starring reaction in order to obtain said functionalised, coupled or starred block copolymer.

18. A process for the preparation of a functionalised, coupled or starred block copolymer according to one of the preceding claims, **characterised in that** said compound A is a trialkylaluminium the number of carbon atoms of which varies from 1 to 12, such as trioctylaluminium.

19. A process for the preparation of a functionalised, coupled or starred block copolymer according to one of the preceding claims, **characterised in that** said compound B is an alcoholate of barium, strontium or calcium, such as barium ethyl diglycolate or barium nonylphenoxide.

20. A process for the preparation of a functionalised, coupled or starred block copolymer according to Claim 15 or 16, **characterised in that** said first step comprises the production of a premix of said compounds A and B in said hydrocarbon solvent such that the molar ratio A/B is between 0.5 and 5, then heating of said premix to a temperature of between 20°C and 120°C.

21. A process for the preparation of a functionalised, coupled or starred block copolymer according to one of the preceding claims, **characterised in that** said hydrocarbon solvent comprises toluene and/or cyclohexane.

22. A process for the preparation of a functionalised, coupled or starred block copolymer according to one of the preceding claims, **characterised in that** the molar ratio (compound C / compound B) is between 0.2 and 4.

23. A process for the preparation of a functionalised, coupled or starred block copolymer according to one of the preceding claims, **characterised in that** said diene elastomer forming said or each block other than a polyisoprene is a copolymer of butadiene and a vinyl aromatic compound, such as styrene.

24. A functionalised, coupled or starred block copolymer which is usable in a sulphur-cross-linkable rubber composition comprising carbon black as reinforcing filler and of reduced hysteresis in the cross-linked state, one at least of said blocks consisting of a polyisoprene and at least one other block consisting of a diene elastomer other than a polyisoprene the molar ratio of units originating from one or more conjugated dienes of which is greater than 15%, **characterised in that**:
- said block formed of a diene elastomer other than a polyisoprene is functionalised, coupled or starred by means of a functionalising, coupling or starring agent comprising one, two or at least three epoxy groups respectively, and **in that**
- said polyisoprene block(s) has(have) a number-average molecular weight Mₙ₁ of between 2,500 and 20,000 g/mol, said block(s) formed of a diene elastomer other than a polyisoprene having a number-average molecular weight Mₙ₂ of between 65,000 and 350,000 g/mol and a content of trans-1,4 linkages equal to or greater than 70%.

25. A functionalised block copolymer according to Claim 24, **characterised in that** said functionalising agent comprises a monoepoxy group, such as a monoglycidyl ether group, such that said copolymer is linear with two blocks.

26. A coupled block copolymer according to Claim 24, **characterised in that** said coupling agent comprises a diepoxy group, such as a bis(glycidyl ether) group, such that said copolymer is linear with three blocks, the two end blocks each being formed of a polyisoprene.

27. A coupled block copolymer according to Claim 26, **characterised in that** said coupling agent is bis(4-glycidyloxyphenyl)methane.

28. A starred block copolymer according to Claim 24, **characterised in that** said starring agent comprises a group with n epoxy functions with n being a natural integer equal to or greater than 3, such that said copolymer is branched with n branches, each branch comprising two blocks of which the end block is formed of a polyisoprene.

29. A starred block copolymer according to Claim 28, **characterised in that** said starring agent comprises a tetraepoxy group for obtaining a branched copolymer with 4 branches.

30. A starred block copolymer according to Claim 29, **characterised in that** said starring agent is bis(4-(diglycidylamino)phenyl)methane.

31. A starred block copolymer according to Claim 28, **characterised in that** said starring agent comprises more than 4 epoxy functions interconnected by nitrogen atoms.

32. A functionalised, coupled or starred block copolymer according to one of Claims 24 to 31, **characterised in that** the ratio of said number-average molecular weights Mₙ₁ / Mₙ₂ is between 5 and 20%.

33. A functionalised, coupled or starred block copolymer according to one of Claims 24 to 32, **characterised in that** said diene elastomer forming said or each block other than a polyisoprene is a copolymer of butadiene and a vinyl aromatic compound, such as styrene.

34. A functionalised, coupled or starred block copolymer according to one of Claims 24 to 33, **characterised in that** said or each polyisoprene block has a content of 3,4 and 1,2 vinyl linkages which is substantially of between 1 and 20%.

35. A cross-linkable or cross-linked rubber composition, having a reduced hysteresis in the cross-linked state and usable to form a tyre tread, said composition comprising a reinforcing filler formed in its entirety or in part of carbon black, **characterised in that** it comprises a functionalised, coupled or starred block copolymer according to one of Claims 24 to 34.

36. A rubber composition according to Claim 35, **characterised in that** it comprises said block copolymer in a quantity greater than 50 phr and possibly as much as 100 phr (phr: parts by weight per hundred parts of elastomer(s)).

37. A rubber composition according to Claim 36, **characterised in that** it comprises said block copolymer in a quantity of 100 phr.

38. A rubber composition according to one of Claims 35 to 37, **characterised in that** said reinforcing filler comprises carbon black in a majority proportion.

39. A rubber composition according to one of Claims 35 to 38, **characterised in that** said reinforcing filler comprises carbon black in a quantity greater than 40 phr (phr: parts by weight per hundred parts of elastomer(s)).

40. A tyre tread usable for reducing the rolling resistance of a tyre incorporating same, **characterised in that** it comprises a rubber composition according to one of Claims 35 to 39.

41. A tyre having reduced rolling resistance, **characterised in that** it comprises a tread according to Claim 40.

## Patentansprüche

1. Verfahren zur Herstellung eines funktionalisierten, gekuppelten oder sternverzweigten Blockcopolymers, das in einer mit Schwefel vernetzbaren Kautschukzusammensetzung, die Ruß umfasst und in vernetztem Zustand eine verringerte Hysterese aufweist, verwendbar ist, wobei mindestens einer der Blöcke aus einem Polyisopren besteht und mindestens ein anderer Block aus einem anderen Dienelastomer als einem Polyisopren besteht, dessen molarer Anteil an Einheiten, die aus einem oder mehreren konjugierten Dienen hervorgehen, über 15% liegt, **dadurch gekennzeichnet, dass** das Verfahren:
(i) die Copolymerisation eines oder mehrerer Monomere, die mindestens ein anderes konjugiertes Dien als Isopren umfassen, mit Hilfe eines katalytischen Systems, das ein Kohlenwasserstoff-Lösungsmittel, eine Verbindung A eines Metalls der Gruppe IIIA, eine Verbindung B eines Erdalkalimetalls und einen Polymerinitiator C mit einer C-Li-Bindung, der aus einem monolithiierten nichtfunktionalisierten Polyisopren zur Bildung des oder jedes Polyisoprenblocks besteht, umfasst, wobei der Polyisoprenblock bzw. die Polyisoprenblöcke ein zahlenmittleres Molekulargewicht Mₙ₁ zwischen 2500 und 20.000 g/mol aufweist bzw. aufweisen, wobei der Block bzw. die Blöcke aus einem anderen Dienelastomer als einem Polyisopren einen Gehalt an trans-1,4-Verknüpfungen größer gleich 70% und ein zahlenmittleres Molekulargewicht Mₙ₂ zwischen 65.000 und 350.000 g/mol aufweist bzw. aufweisen, und
(ii) die Zugabe eines Funktionalisierungs-, Kupplungs- oder Sternverzweigungsmittels mit einer, zwei bzw. mindestens drei Epoxidgruppen zu dem Produkt der Copolymerisation, so dass der Block, der aus einem anderen Dienelastomer als einem Polyisopren besteht, funktionalisiert, gekuppelt oder sternverzweigt wird,
umfasst.

2. Verfahren zur Herstellung eines funktionalisierten, gekuppelten oder sternverzweigten Blockcopolymers nach Anspruch 1, **dadurch gekennzeichnet, dass** das Funktionalisierungs-, Kupplungs-oder Sternverzweigungsmittel eine, zwei bzw. mindestens drei Glycidylgruppen umfasst.

3. Verfahren zur Herstellung eines funktionalisierten, gekuppelten oder sternverzweigten Blockcopolymers nach Anspruch 2, **dadurch gekennzeichnet, dass** das Funktionalisierungs-, Kupplungs-oder Sternverzweigungsmittel eine, zwei bzw. mindestens drei Glycidylethergruppen umfasst.

4. Verfahren zur Herstellung eines funktionalisierten, gekuppelten oder sternverzweigten Blockcopolymers nach Anspruch 3, **dadurch gekennzeichnet, dass** die oder jede Glycidylethergruppe an eine Alkyl-, Cycloalkyl-, Aryl- oder Aralkylgruppe gebunden ist.

5. Verfahren zur Herstellung eines funktionalisierten Blockcopolymers nach einem der Ansprüche 1 bis 4, **dadurch gekennzeichnet, dass** es die Zugabe eines Funktionalisierungsmittels mit einer Monoepoxidgruppe, wie einer Monoglycidylethergruppe, zum Erhalt eines linearen Zweiblockcopolymers umfasst.

6. Verfahren zur Herstellung eines gekuppelten Blockcopolymers nach einem der Ansprüche 1 bis 4, **dadurch gekennzeichnet, dass** es die Zugabe eines Kupplungsmittels mit einer Diepoxidgruppe, wie einer Bis(glycidylether)gruppe, zum Erhalt eines linearen Dreiblockcopolymers, dessen zwei Endblöcke jeweils aus einem Polyisopren bestehen, umfasst.

7. Verfahren zur Herstellung eines gekuppelten Blockcopolymers nach Anspruch 6, **dadurch gekennzeichnet, dass** es sich bei dem Kupplungsmittel um Bis(4-glycidyloxyphenyl)methan handelt.

8. Verfahren zur Herstellung eines sternverzweigten Blockcopolymers nach einem der Ansprüche 1 bis 4, **dadurch gekennzeichnet, dass** es die Zugabe eines Sternverzweigungsmittels mit einer Gruppe mit n Epoxidfunktionen, wobei n für eine natürliche ganze Zahl größer gleich 3 steht, zum Erhalt eines verzweigten Copolymers mit n Verzweigungen, wobei jede Verzweigung zwei Blöcke umfasst, von denen der Endblock aus einem Polyisopren besteht, umfasst.

9. Verfahren zur Herstellung eines sternverzweigten Blockcopolymers nach Anspruch 8, **dadurch gekennzeichnet, dass** das Sternverzweigungsmittel eine Tetraepoxidgruppe umfasst, zum Erhalt eines verzweigten Copolymers mit 4 Verzweigungen.

10. Verfahren zur Herstellung eines sternverzweigten Blockcopolymers nach Anspruch 9, **dadurch gekennzeichnet, dass** es sich bei dem Sternverzweigungsmittel um Bis(4-diglycidylamino)phenyl) methan handelt.

11. Verfahren zur Herstellung eines sternverzweigten Blockcopolymers nach Anspruch 8, **dadurch gekennzeichnet, dass** das Sternverzweigungsmittel mehr als 4 Epoxidfunktionen, die über Stickstoffatome miteinander verbunden sind, umfasst.

12. Verfahren zur Herstellung eines funktionalisierten, gekuppelten oder sternverzweigten Blockcopolymers nach einem der vorhergehenden Ansprüche, **dadurch gekennzeichnet, dass** die Zugabe des Funktionalisierungs-, Kupplungs- oder Sternverzweigungsmittels so durchgeführt wird, dass das Molverhältnis (Funktionalisierungs-, Kupplungs-oder Sternverzweigungsmittel/Li) zwischen 0,2 und 1 liegt.

13. Verfahren zur Herstellung eines funktionalisierten, gekuppelten oder sternverzweigten Blockcopolymers nach einem der vorhergehenden Ansprüche, **dadurch gekennzeichnet, dass** das Verhältnis der zahlenmittleren Molekulargewichte Mₙ₁/Mₙ₂ zwischen 5 und 20% liegt.

14. Verfahren zur Herstellung eines funktionalisierten, gekuppelten oder sternverzweigten Blockcopolymers nach einem der Ansprüche 1 bis 13, **dadurch gekennzeichnet, dass** das katalytische System einen Cokatalysator, der sich aus dem Produkt der Reaktion der Verbindung A und der Verbindung B in dem Kohlenwasserstoff-Lösungsmittel ergibt, und den Polymerinitiator C umfasst.

15. Verfahren zur Herstellung eines funktionalisierten, gekuppelten oder sternverzweigten Blockcopolymers nach Anspruch 14, **dadurch gekennzeichnet, dass** es:
- in einem ersten Schritt die Herstellung des Cokatalysators durch Umsetzung der Metallverbindungen A und B miteinander in dem Kohlenwasserstoff-Lösungsmittel, dann
- in einem zweiten Schritt das Inberührungbringen des Cokatalysators mit dem Polymerisationsmedium, das das oder die zu copolymerisierenden Monomere in Lösung in einem Polymerisationslösungsmittel umfasst, mit Ausnahme des Polymerinitiators C, dann
- in einem dritten Schritt die Umsetzung der im zweiten Schritt erhaltenen Mischung mit Hilfe des Polymerinitiators C, dann
- in einem vierten Schritt die Zugabe des Funktionalisierungs-, Kupplungs- oder Sternverzweigungsmittels zu dem Produkt der Copolymerisation,
und die spätere Stoppung der Funktionalisierungs-, Kupplungs- oder Sternverzweigungsreaktion zum Erhalt des funktionalisierten, gekuppelten oder sternverzweigten Blockcopolymers umfasst.

16. Verfahren zur Herstellung eines funktionalisierten, gekuppelten oder sternverzweigten Blockcopolymers nach Anspruch 14, **dadurch gekennzeichnet, dass** es:
- in einem ersten Schritt die Herstellung des Cokatalysators durch Umsetzung der Metallverbindungen A und B miteinander in dem Kohlenwasserstoff-Lösungsmittel, dann
- in einem zweiten Schritt die Zugabe des Polymerinitiators C zu dem im ersten Schritt erhaltenen Cokatalysator, dann
- in einem dritten Schritt die Zugabe des so erhaltenen katalytischen Systems zu dem Polymerisationsmedium, das das oder die zu copolymerisierenden Monomere in Lösung in einem Polymerisationslösungsmittel umfasst, dann
- in einem vierten Schritt die Zugabe des Funktionalisierungs-, Kupplungs- oder Sternverzweigungsmittels zu dem Produkt der Copolymerisation,
und die spätere Stoppung der Funktionalisierungs-, Kupplungs- oder Sternverzweigungsreaktion zum Erhalt des funktionalisierten, gekuppelten oder sternverzweigten Blockcopolymers umfasst.

17. Verfahren zur Herstellung eines funktionalisierten, gekuppelten oder sternverzweigten Blockcopolymers nach einem der Ansprüche 1 bis 13, **dadurch gekennzeichnet, dass** es:
- in einem ersten Schritt ein Vormischen der Verbindungen A und C in dem Kohlenwasserstoff-Lösungsmittel, dann
- in einem zweiten Schritt die Zugabe dieser Vormischung zu dem Polymerisationsmedium, das das oder die zu copolymerisierenden Monomere in Lösung in einem Polymerisationslösungsmittel umfasst, dann
- in einem dritten Schritt die Zugabe der Verbindung B zu der im zweiten Schritt erhaltenen Mischung, dann
- in einem vierten Schritt die Zugabe des Funktionalisierungs-, Kupplungs- oder Sternverzweigungsmittels zu dem Produkt der Copolymerisation,
und die spätere Stoppung der Funktionalisierungs-, Kupplungs- oder Sternverzweigungsreaktion zum Erhalt des funktionalisierten, gekuppelten oder sternverzweigten Blockcopolymers umfasst.

18. Verfahren zur Herstellung eines funktionalisierten, gekuppelten oder sternverzweigten Blockcopolymers nach einem der vorhergehenden Ansprüche, **dadurch gekennzeichnet, dass** es sich bei der Verbindung A um ein Trialkylaluminium mit einer Zahl von Kohlenstoffatomen, die von 1 bis 12 variiert, wie Trioctylaluminium, handelt.

19. Verfahren zur Herstellung eines funktionalisierten, gekuppelten oder sternverzweigten Blockcopolymers nach einem der vorhergehenden Ansprüche, **dadurch gekennzeichnet, dass** es sich bei der Verbindung B um ein Barium-, Strontium-oder Calciumalkoholat, wie Bariumethyldiglykolat oder -nonylphenoxid, handelt.

20. Verfahren zur Herstellung eines funktionalisierten, gekuppelten oder sternverzweigten Blockcopolymers nach Anspruch 15 oder 16, **dadurch gekennzeichnet, dass** der erste Schritt die derartige Herstellung einer Vormischung der Verbindungen A und B in dem Kohlenwasserstoff-Lösungsmittel, dass das Molverhältnis A/B zwischen 0,5 und 5 liegt, und dann das Erhitzen der Vormischung auf eine Temperatur zwischen 20°C und 120°C umfasst.

21. Verfahren zur Herstellung eines funktionalisierten, gekuppelten oder sternverzweigten Blockcopolymers nach einem der vorhergehenden Ansprüche, **dadurch gekennzeichnet, dass** das Kohlenwasserstoff-Lösungsmittel Toluol und/oder Cyclohexan umfasst.

22. Verfahren zur Herstellung eines funktionalisierten, gekuppelten oder sternverzweigten Blockcopolymers nach einem der vorhergehenden Ansprüche, **dadurch gekennzeichnet, dass** das Molverhältnis (Verbindung C/Verbindung B) zwischen 0,2 und 4 liegt.

23. Verfahren zur Herstellung eines funktionalisierten, gekuppelten oder sternverzweigten Blockcopolymers nach einem der vorhergehenden Ansprüche, **dadurch gekennzeichnet, dass** es sich bei dem Dienelastomer, aus dem der oder jeder andere Block als ein Polyisopren besteht, um ein Copolymer von Butadien und einem Vinylaromaten, wie Styrol, handelt.

24. Funktionalisiertes, gekuppeltes oder sternverzweigtes Blockcopolymer, das in einer mit Schwefel vernetzbaren Kautschukzusammensetzung, die Ruß als verstärkenden Füllstoff umfasst und in vernetztem Zustand eine verringerte Hysterese aufweiset, verwendbar ist, wobei mindestens einer der Blöcke aus einem Polyisopren besteht und mindestens ein anderer Block aus einem anderen Dienelastomer als einem Polyisopren besteht, dessen molarer Anteil an Einheiten, die aus einem oder mehreren konjugierten Dienen hervorgehen, über 15% liegt, **dadurch gekennzeichnet, dass**:
- der Block, der aus einem anderen Dienelastomer als einem Polyisopren besteht, mit einem Funktionalisierungs-, Kupplungs- oder Sternverzweigungsmittel mit einer, zwei bzw. mindestens drei Epoxidgruppen funktionalisiert, gekuppelt oder sternverzweigt ist und
- der Polyisoprenblock bzw. die Polyisoprenblöcke ein zahlenmittleres Molekulargewicht Mₙ₁ zwischen 2500 und 20.000 g/mol aufweist bzw. aufweisen, wobei der Block bzw. die Blöcke aus einem anderen Dienelastomer als einem Polyisopren ein zahlenmittleres Molekulargewicht Mₙ₂ zwischen 65.000 und 350.000 g/mol aufweist bzw. aufweisen, einen Gehalt an trans-1,4-Verknüpfungen größer gleich 70% aufweist bzw. aufweisen.

25. Funktionalisiertes Blockcopolymer nach Anspruch 24, **dadurch gekennzeichnet, dass** das Funktionalisierungsmittel eine Monoepoxidgruppe, wie eine Monoglycidylethergruppe, umfasst, so dass das Copolymer linear ist und zwei Blöcke aufweist.

26. Gekuppeltes Blockcopolymer nach Anspruch 24, **dadurch gekennzeichnet, dass** das Kupplungsmittel eine Diepoxidgruppe, wie eine Bis(glycidylether)-gruppe umfasst, so dass das Copolymer linear ist und drei Blöcke aufweist, wobei die zwei Endblöcke jeweils aus einem Polyisopren bestehen.

27. Gekuppeltes Blockcopolymer nach Anspruch 26, **dadurch gekennzeichnet, dass** es sich bei dem Kupplungsmittel um Bis(4-glycidyloxyphenyl)methan handelt.

28. Sternverzweigtes Blockcopolymer nach Anspruch 24, **dadurch gekennzeichnet, dass** das Sternverzweigungsmittel eine Gruppe mit n Epoxidfunktionen umfasst, wobei n für eine natürliche ganze Zahl größer gleich 3 steht, so dass das Copolymer mit n Verzweigungen verzweigt ist, wobei jede Verzweigung zwei Blöcke umfasst, von denen der Endblock aus einem Polyisopren besteht.

29. Sternverzweigtes Blockcopolymer nach Anspruch 28, **dadurch gekennzeichnet, dass** das Sternverzweigungsmittel eine Tetraepoxidgruppe umfasst, zum Erhalt eines Copolymers mit 4 Verzweigungen.

30. Sternverzweigtes Blockcopolymer nach Anspruch 29, **dadurch gekennzeichnet, dass** es sich bei dem Sternverzweigungsmittel um Bis(4-(diglycidyl-amino)phenyl)methan handelt.

31. Sternverzweigtes Blockcopolymer nach Anspruch 28, **dadurch gekennzeichnet, dass** das Sternverzweigungsmittel mehr als 4 Epoxidfunktionen, die über Stickstoffatome miteinander verbunden sind, umfasst.

32. Funktionalisiertes, gekuppeltes oder sternverzweigtes Blockcopolymer nach einem der Ansprüche 24 bis 31, **dadurch gekennzeichnet, dass** das Verhältnis der zahlenmittleren Molekulargewichte Mₙ₁/Mₙ₂ zwischen 5 und 20% liegt.

33. Funktionalisiertes, gekuppeltes oder sternverzweigtes Blockcopolymer nach einem der Ansprüche 24 bis 32, **dadurch gekennzeichnet, dass** es sich bei dem Dienelastomer, aus dem der oder jeder andere Block als ein Polyisopren besteht, um ein Copolymer von Butadien und einem Vinylaromaten, wie Styrol, handelt.

34. Funktionalisiertes, gekuppeltes oder sternverzweigtes Blockcopolymer nach einem der Ansprüche 24 bis 33, **dadurch gekennzeichnet, dass** der oder jeder Polyisoprenblock einen Gehalt an 3,4- und 1,2-Vinylverknüpfungen aufweiset, der weitgehend zwischen 1 und 20% liegt.

35. Vernetzbare oder vernetzte Kautschukzusammensetzung, die in vernetztem Zustand eine verringerte Hysterese aufweist und zur Herstellung einer Reifenmantellauffläche verwendet werden kann, wobei die Zusammensetzung einen verstärkenden Füllstoff, der ganz oder teilweise aus Ruß besteht, umfasst, **dadurch gekennzeichnet, dass** sie ein funktionalisiertes, gekuppeltes oder sternverzweigtes Blockcopolymer nach einem der Ansprüche 24 bis 34 umfasst.

36. Kautschukzusammensetzung nach Anspruch 35, **dadurch gekennzeichnet, dass** sie das Blockcopolymer in einer Menge von mehr als 50 phr und bis zu 100 phr umfasst (phr = Gewichtsteile pro hundert Teile Elastomer(e)).

37. Kautschukzusammensetzung nach Anspruch 36, **dadurch gekennzeichnet, dass** sie das Blockcopolymer in einer Menge von 100 phr umfasst.

38. Kautschukzusammensetzung nach einem der Ansprüche 35 bis 37, **dadurch gekennzeichnet, dass** der verstärkende Füllstoff mehrheitlich Ruß umfasst.

39. Kautschukzusammensetzung nach einem der Ansprüche 35 bis 38, **dadurch gekennzeichnet, dass** der verstärkende Füllstoff Ruß in einer Menge von mehr als 40 phr umfasst (phr = Gewichtsteile pro hundert Teile Elastomer(e)).

40. Reifenmantellauffläche, die zur Verringerung des Rollwiderstands eines Reifenmantels, in den sie eingearbeitet ist, verwendet werden kann, **dadurch gekennzeichnet, dass** sie eine Kautschukzusammensetzung nach einem der Ansprüche 35 bis 39 umfasst.

41. Reifenmantel mit verringertem Rollwiderstand, **dadurch gekennzeichnet, dass** er eine Lauffläche nach Anspruch 40 umfasst.
